(19) **Europäisches Patentamt / European Patent Office / Office européen des brevets**

(11) **EP 2 626 679 A1**

(12) **EUROPEAN PATENT APPLICATION**

(43) Date of publication:
**14.08.2013 Bulletin 2013/33**

(51) Int Cl.:
*G01L 3/24* (2006.01)          *G01M 13/02* (2006.01)
*G01M 13/04* (2006.01)          *F03D 7/02* (2006.01)

(21) Application number: **12154932.3**

(22) Date of filing: **10.02.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventors:
- **Hoegh, Gustav**
  **7400 Herning (DK)**
- **Laurberg, Hans**
  **8000 Århus C (DK)**

(54) **Method for determining the damage of at least one rotatable component of a wind turbine**

(57)     Method for determining the damage of at least one rotatable component of a wind turbine, comprising the steps of:
- determining at least one component-specific load information of at least one rotatable component, the load information indicating at least one specific load of the respective component for a given time interval correlated with the number of rotations the component has performed at the respective load within the given time interval, and
- determining a component-specific damage information from the at least one load information, with the damage information indicating the degree of damage of the respective component, whereby additionally a component-specific material factor is considered.

FIG 1

**Description**

The invention relates to a method for determining the damage of at least one rotatable component of a wind turbine.

A wind turbine comprises a number of rotating or rotatable components. Examples are the main shaft, components of respective gear boxes, components of the generator, different kinds of bearings, etc. The respective rotating or rotatable components have to withstand high mechanical loads, particularly oscillating loads which loads lead to wear and damage effects. Thus, determining or estimating the damage or degree of damage of a respective rotating or rotatable component of a wind turbine is of material importance for operating the wind turbine.

A number of documents relate to the field of estimating damage of rotating or rotatable components. As an example, US 5 210 704 discloses a system for prognosis and diagnostics of failure and wearout monitoring and for prediction of life expectancy of helicopter gear boxes and other rotating equipment.

Yet, there is a need for respective methods allowing a fast and easy way to determine the damage of respective rotating or rotatable components in the field of wind energy.

It is the object of the invention to provide a fast and easy executable method for determining the damage of at least one rotatable component of a wind turbine.

This is achieved by the inventive method for determining the damage of at least one rotatable component of a wind turbine, comprising the steps of:

- determining at least one component-specific load information of at least one rotatable component, the load information indicating at least one specific load of the respective component for a given time interval correlated with the number of rotations the component has performed at the respective load within the given time interval, and
- determining a component-specific damage information from the at least one load information, with the damage information indicating the degree of damage of the respective component, whereby additionally a component-specific material factor is considered.

The inventive method provides a fast and easy approach to determine or estimate the damage of respective rotating or rotatable components of a wind turbine. The inventive method may be executed by appropriate control and/or computing means such as implemented in or provided with a control unit of a wind turbine, i. e. a wind turbine controller.

According to the inventive method, at least one component-specific load information of at least one rotatable component is determined in a first step. The load information indicates at least one specific mechanical load of the respective component for a given time interval correlated with the number of rotations the component has performed at the respective load within the given time interval. Hence, the component-specific load information takes into account at least one certain load or load state of a respective component, whereby the number of rotations the respective component has performed under the respective load within the given time interval is considered.

The mechanical load generally depends on the concrete type of the respective component and the respective load situation or load state the component has to withstand during operation. Thus, the term "load" may refer to applied torque, moment, or other radial and/or axial forces, etc.

The inventive method generally applies to all kinds of respective rotating or rotatable components of a wind turbine. Examples are the main or central shaft, the bearings in the drive train, blade pitch bearings, rotating components of the generator, etc.

The applied load of a component may be taken from measurements, whereby appropriate load measurement means such as strain gauges or the like allocated to the respective components may be used. Additionally or alternatively, the load of a component may be estimated from appropriate load simulations or load-models, respectively.

The determination of a respective load information is based on the fact that the wear of a component is essentially defined by the mechanical load on the component, i. e. its load state and the number of rotations the respective component performs or has performed under the respective load, i. e. in the respective load state. Thereby, the component-specific load information considers that the wear or damage of a component is dependent of the load the component has to withstand during operation (the higher the load, the higher the wear of the component).

It is possible to determine respective load information for different absolute loads of the respective component separately and for a discrete spectrum of loads, respectively. In such a manner, the load of a component may include different load states of the component, whereby the respective number of rotations the respective component performs or has performed at each respective load is counted within the given time interval.

The load information may consider respective numbers of rotations for all load states within the respective spectrum of load states. In such a manner, all regarded loads or load states and the corresponding number of rotations at the respective load states are considered i. e. particularly summed up for building the load information. Alternatively, the load information may also be used to consider only one specific or certain load or load state of interest of the respective component and the corresponding number the respective component has performed under the specific load state within the respective time interval.

I. e., for the exemplary embodiment of the main shaft as a respective rotatable or rotating component, the load information may indicate that the respective component has performed 4.000.000 rotations under a load of 300 kNm and 10.000.000 rotations under a load of 1700 kNm, for instance. Hence, the load or load state a respective component has to encounter during operation of the wind turbine may be classified and may be regarded individually or collectively, i.e. all loads or load states are summarised. This is useful since different kinds of mechanical and/or physical damage of the respective component may be determined in the following.

Hence, plotting a respective component-specific load information may lead to an y-x-diagram, whereby the y-axis refers to the number of rotations and the x-axis refers to different mechanical loads or load states of the respective component. The loads may be classified in so called "bins". Thereby, a "bin" refers to a specific load and the number of rotations, the respective component has performed at the respective load within the given time interval. The number of "bins" may be 50, for instance.

Generally, the named time interval may refer to the time since first operation of the wind turbine or the respective component or any other defined time interval such as a year, a month, a week, a day etc. Hence, the definition of the time interval may be arbitrary.

In a second step of the inventive method, a component-specific damage information is determined from the component-specific load information. The damage information indicates the degree of damage of the respective component. Thereby, a component-specific material factor is considered. The damage information is determined i. e. calculated from the load information in that the respective load states and corresponding number of rotations, i. e. "bins" are summed up under consideration of the component-specific material factor (cf. formula i):

$$D = \sum (n \ x \ L^m) \quad (i)$$

Thereby, D refers to the total damage of the component, n refers to the number of rotations the component has performed under a certain load, L refers to the certain load, and m refers to the material factor, which may be taken from Woehler data, i. e. component-specific data taken from Woehler experiments. The parameters n and L are taken from the load information.

As an example, the material factor may be the component-specific fatigue strength and/or fatigue limit, particularly taken from Woehler data or Woehler experiments, respectively.

The certain components of a wind turbine may comprise gear boxes or may be built as gear boxes. Thereby, it is possible that at least one component-specific gear ratio information and/or at least one component-specific contact point information (mesh number information) is further considered for determining the damage of a respective component (cf. formula ii). In such a manner, it is possible to determine the damage of the sub-components of a respective component in the shape of a gear box, for instance.

$$D = \sum (n \ x \ L^m \ x \ G \ x \ C) \quad (ii)$$

Thereby, G refers to the gear ratio of the component in the shape of a gear box, i. e. G is to account for the later stages of a two- or multistage gear box, whereby G = 1 for a direct drive wind turbine, i. e. a direct drive wind turbine without a gear box between the rotor hub and the generator. C refers to the number of contact points the respective component has per rotation i. e. C specifies the number of interactions the rotating component may have with other rotating components. It can be seen that the number of contact points effectively increases the damage with a factor per rotation of the component.

For an exemplary embodiment of a component in the shape of a planetary gear box C may be 2 if the planetary gear has two interactions between the planet ring and the planets for each rotation of the planet carrier. In such a manner, it is feasible to determine the damage on all stages of gear boxes.

The load information may consider power output of the wind turbine and/or rotational speed and/or torque of the respective component. In the first case, the load on the respective component such as particularly the main shaft may be derived from current power output of the wind turbine and rotational speed of the respective component for instance. In such a manner, electromechanical torque (power output/rotational speed) may be considered for determining the load information. In the latter case directly measured torque of the component may be used for determining the load information. As mentioned above, torque may be measured by appropriate strain gauges or the like. Yet, torque of the respective component, particularly torque of the main shaft, may also be determined from rotational speed and power output of the wind turbine (torque = power output/rotational speed), i. e. torque may also be derived or estimated from operational parameters of the wind turbine.

Thereby, it is of advantage to consider electromechanical losses of the wind turbine. In such a manner, better and more exact results may be obtained for deriving torque.

It is further feasible that a component-specific lifetime information indicating the already consumed or remaining lifetime of the respective component is determined from the damage information and at least one component-specific damage threshold information indicating the maximum damage the component is able to withstand without failure. Hence, lifetime may be determined from formula iii:

$$LT = (D / D_d) \times LT_d \qquad (iii)$$

Thereby, LT refers to the already consumed or still remaining lifetime of the respective component which are reciprocal values, $D_d$ refers to the given component-specific damage threshold information, and $LT_d$ refers to the given component-specific lifetime, i. e. the designated lifetime the component has.

The at least one component-specific damage threshold information, i. e. $D_d$ (cf. formula iii) may be determined from a number of component-specific reference cycles, component-specific load information, and a component-specific material factor, particularly taken from Woehler data. Hence, the component-specific damage threshold information may be determined from formula iv:

$$D_d = n_r \times L_d^m \qquad (iv)$$

Thereby, $n_r$ refers to the component-specific reference cycles, $L_d$ refers to component-specific load information indicating the load the respective component has to withstand for the given reference cycles, and m refers to the component-specific material factor, particularly taken from Woehler data.

It is also possible to determine a component-specific lifetime information indicating the already consumed or still remaining lifetime of the respective component from an equivalent load information and a component-specific reference load information considering a respective damage of the respective component in dependence of the number of rotations the component has performed and a component-specific material factor, particularly taken from Woehler data (cf. formula v).

$$LT = (L_e/L_{e,\,d})^m \times LT_d \qquad (v)$$

Thereby, LT refers to the already consumed or still remaining lifetime of the respective component, $L_e$ refers to the equivalent load information, $L_{e,\,d}$ refers to the component-specific reference load information, m refers to the component-specific material factor, particularly taken from Woehler data, and $LT_d$ refers to the given component-specific lifetime, i. e. the designated lifetime the component has.

Generally, the load information and/or the damage information may be determined continuously and/or not continuously. In the first case, an exact monitoring of the load and/or damage or respective changes may be realised at all times. In the latter case, computing power may be saved since the respective information may only be determined at certain defined times.

It is further possible that already determined component-specific load information and/or damage information and/or lifetime information are stored in a storage medium, whereby the stored load information and/or damage information and/or lifetime information are used as the basis for determining respective load information and/or damage information and/or lifetime information of further rotatable or rotating components by applying an appropriate component-specific material factor of the respective further components. Again, the material factor is particularly taken from Woehler data. Hence, the named formulae i - v may be used as appropriate algorithms to be applied to all kinds of rotatable components of the wind turbine. It is possible to simply adapt the material factor corresponding to the respective component, if all other terms or parameters do not change. Hence, for example lifetime of a further component may be determined from the respective stored lifetime information under consideration of another material factor.

Generally, all kinds of information used or determined in the embodiments of the inventive method, i. e. particularly the load information and/or the damage information and/or the lifetime information, may be used as input parameters for a wind turbine control unit such as a central wind turbine controller for instance. The control unit may perform control of the operation of the wind turbine in dependency of the respective input parameters.

Besides, the invention relates to a wind turbine adapted to execute the method as described before. Therefore, the wind turbine preferably comprises at least one control unit which is adapted to perform the method as described before.
The invention is described in detail as reference is made to the principle drawings, whereby:

fig. 1 shows a principle drawing of a wind turbine according to an exemplary embodiment of the invention;
fig. 2 shows a graphical illustration of a load information according to an exemplary embodiment of the invention.

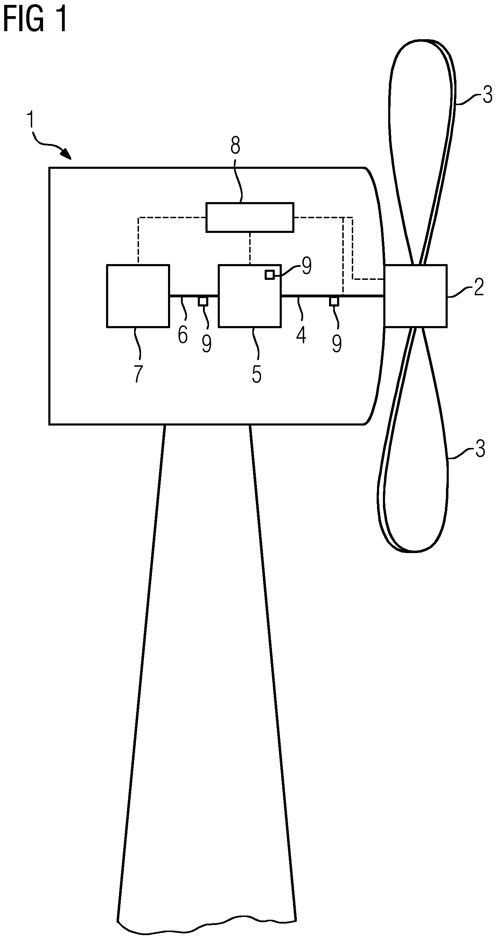

Fig. 1 shows a principle drawing of a wind turbine 1 according to an exemplary embodiment of the invention. The wind turbine 1 comprises several rotatable components such as the rotor hub 2 having respective rotor blades 3 attached thereto, a main shaft 4 establishing a mechanical connection between the rotor hub 2 and a gear box 5 in the shape of a planetary gear, a second shaft 6 establishing a mechanical connection between the gear box 5 and a generator 7 i. e. the rotatable rotor of the generator 7 for instance.
Further, a central control unit 8 in terms of a central wind turbine controller is provided. The central control unit 8 is connected to diverse rotatable components of the wind turbine 1 such as the already mentioned rotor hub 2, the central shaft 4, the gear box 5, the second shaft 6, and the generator 7. The connection allows providing the control unit 8 with operational parameters of the respective rotatable components, particularly current load L and number of rotations n of the respective rotatable components.
The current load of the respective components may be taken from load measurement means such as strain gauges 9 provided with the central shaft 4, the gear box 5, the second shaft 2, and other rotatable components of the drive train of the wind turbine 1.
On basis of the load data sent from the respective strain gauges, the control unit 8 is adapted to determine a component-specific load information. The load information indicates a number of specific loads or load states of the respective rotatable component for a given time interval correlated with the number of rotations the component has performed at the respective load within the given time interval.

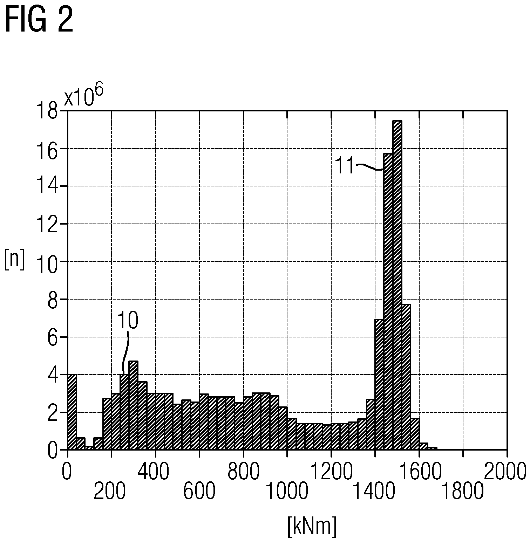

Fig. 2 shows a graphical illustration of a load information according to an exemplary embodiment of the invention. The load information is depicted in the shape of a y-x-diagram, whereby the y-axis refers to the number of rotations the component has performed and the x-axis refers to different loads of the component.
The load information shown in fig. 2 refers to the central shaft 4. As mentioned before, respective load data is provided by respective strain gauges provided with the central shaft 4. In the diagram of fig. 2 a linear distribution is used, yet other distributions such as a logarithmical distribution may be used as well.
As is discernible, the loads encountered by the central shaft 4 are classified in respective load states or bins i.e. each load is graphically represented by a respective column. The number of rotations the central shaft 4 has performed at the respective loads or load states is measured and plotted. Thereby, a defined time interval is considered, i.e. the bins or columns refer to the number of rotations the central shaft 4 has performed at a defined load within a defined time interval. The time interval may be 1 year, 1 month, 1 day, etc. As can be seen from fig. 2, the central shaft has performed ca. $4 \times 10^6$ rotations at a load (torque) of ca. 280 kNm (cf. column 10) and ca. $16 \times 10^6$ rotations at a load of ca. 1480 kNm (cf. column 11), etc.
Of course, respective load information may be determined for all respective rotatable components of the wind turbine 1. Thus, respective diagrams may be provided for all respective rotatable components of the wind turbine 1 as well.
On basis of the load information, the control unit 8 may determine the damage of a respective rotatable component of the wind turbine 1. This is possible by calculating or deriving a component-specific damage information from the load information using formula i:

$$D = \sum (n \times L^m) \quad (i)$$

Thereby, D refers to the total damage of the component, n refers to the number of rotations the component has performed under a certain load, L refers to the certain load, and m refers to the material factor, which may be taken from Woehler data, i. e. component-specific data taken from Woehler experiments. The parameters n and L are taken from the load information (cf. fig. 2, y-axis and x-axis). Hence, the general inventive principle is that the load of the respective component is classified in different load states, whereby the number of rotations at the respective load states is summarised.
In the case of determining the load and damage of the components of the gear box 5, formula ii may be used:

$$D = \sum (n \times L^m \times G \times C) \quad (ii)$$

Thereby, G refers to the gear ratio of the component in the shape of a gear box, i. e. G is to account for the later stages of a two- or multistage gear box, whereby G = 1 for a direct drive wind turbine, i. e. a direct drive wind turbine without a gear box between the rotor hub and the generator. C refers to the number of contact points the respective component has per rotation i. e. C specifies the number of interactions the rotating component may have with other rotating components. Thereby, it is considered that the number of contact points effectively increases the damage of the respective component with a factor per rotation of the component.

The load of a respective rotatable component of the wind turbine 1 may not only be taken from direct load measurements such as by the use of respective load measurement means in the shape of the strain gauges but also from component-specific load models or load simulations. In such a manner, it is possible to determine the load on a respective component such as particularly the main shaft 4 from the current power output of the wind turbine and rotational speed of the respective component. In such a manner, electromechanical torque (power output/rotational speed) may be considered for determining the load information. In other words, when realising that the load of a respective component is largely dependent on the operational parameters of the wind turbine 1, i. e. particularly dependent on power output and speed of the rotor hub 2 or main shaft 3, it is possible to determine the load on the component on basis of the electromechanical torque.

Thereby, it is to be noted that the mechanical power corresponding to the mechanical load on the respective component is usually larger than the electric power due to losses, which losses are oftentimes refer to the efficiency of the generator. Hence, when knowing respective losses, it is possible to consider respective loss parameters when determining the electromechanical torque. In addition to the electromechanical torque, the main shaft 4 may also exert some torque on the gearbox 5 leading to angular circulation of the gearbox 5 and the generator 7. In this context, the inventive principle allows estimating the torque on a respective component, i. e. particularly the main shaft 4 without the need of providing additional load measurement means such as sensors or the like.

The damage information may be used to determine a component-specific lifetime information indicating the already consumed or remaining lifetime of the respective component from the damage information and at least one component-specific damage threshold information indicating the maximum damage the component is able to withstand without failure. Hence, lifetime of a respective component may be determined from formula iii:

$$ LT = (D \, / \, D_d) \, x \, LT_d \qquad (iii) $$

Thereby, LT refers to the already consumed or still remaining lifetime of the respective component which are reciprocal values, $D_d$ refers to the given component-specific damage threshold information, and $LT_d$ refers to the given component-specific lifetime, i. e. the designated lifetime the component has.

The at least one component-specific damage threshold information, i. e. $D_d$ (cf. formula iii) is determined from a number of component-specific reference cycles, component-specific load information, and a component-specific material factor, particularly taken from Woehler data. Hence, the component-specific damage threshold information may be determined from formula iv:

$$ D_d = n_r \, x \, L_d{}^m \qquad (iv) $$

Thereby, $n_r$ refers to the component-specific reference cycles, $L_d$ refers to component-specific load information indicating the load the respective component has to withstand for the given reference cycles, and m refers to the component-specific material factor, particularly taken from Woehler data.

It is also possible to determine a component-specific lifetime information indicating the already consumed or still remaining lifetime of the respective component from an equivalent load information and a component-specific reference load information considering a respective damage of the respective component in dependence of the number of rotations the component has performed and a component-specific material factor, particularly taken from Woehler data (cf. formula v).

$$ LT = (L_e \, / \, L_{e, \, d})^m \, x \, LT_d \qquad (v) $$

Thereby, LT refers to the already consumed or still remaining lifetime of the respective component, $L_e$ refers to the equivalent load information, $L_{e, d}$ refers to the component-specific reference load information, m refers to the component-specific material factor, particularly taken from Woehler data, and $LT_d$ refers to the given component-specific lifetime, i. e. the designated lifetime the component has.

Generally, the load information and/or the damage information may be determined continuously and/or not continuously. In the first case, an exact monitoring of the load and/or damage or respective changes may be realised at all times. In the latter case, computing power may be saved since the respective information may only be determined at certain defined times.

It is further possible that already determined component-specific load information and/or damage information and/or lifetime information are stored in a storage medium, whereby the stored load information and/or damage information and/or lifetime information are used as the basis for determining respective load information and/or damage information and/or lifetime information of further rotatable or rotating components by applying an appropriate component-specific material factor m of the respective further components. Again, the material factor m is particularly taken from Woehler data, i. e. respective Woehler slopes.

Hence, the named formulae i - v may be used as appropriate algorithms to be applied to all kinds of rotatable components of the wind turbine 1. It is possible to simply adapt the material factor m corresponding to the respective component, if all other terms or parameters do not change. Hence, for example lifetime of a further component may be determined from the respective stored lifetime information under consideration of another material factor.

Hence, the inventive principle allows storing respective load information and/or damage information and/or lifetime information in an effective manner. If a respective component such as a certain component of the gearbox 5 for instance has a different Woehler slope, it is possible to find the corresponding lifetime of that component using the stored values, i. e. the formulae i - v. Generally, the formula i - v may be implemented in an appropriate software means.

Generally, all kinds of information used or determined in the embodiments of the inventive method, i. e. particularly the load information and/or the damage information and/or the lifetime information, may be used as input parameters for a wind turbine control unit such as control unit 8 for instance. The control unit 8 may perform control of the operation of the wind turbine 1 in dependency of the respective input parameters.

Although the present invention has been described in detail with reference to the preferred embodiment, the present invention is not limited by the disclosed examples from which the skilled person is able to derive other variations without departing from the scope of the invention.

## Claims

**1.** Method for determining the damage of at least one rotatable component of a wind turbine (1), comprising the steps of:

- determining at least one component-specific load information of at least one rotatable component, the load information indicating at least one specific load of the respective component for a given time interval correlated with the number of rotations the component has performed at the respective load within the given time interval, and
- determining a component-specific damage information from the at least one load information, with the damage information indicating the degree of damage of the respective component, whereby additionally a component-specific material factor is considered.

**2.** Method according to claim 1, wherein the component-specific material factor is the component-specific fatigue strength and/or fatigue limit, particularly taken from respective component material specific Woehler data.

**3.** Method according to claims 1 or 2, wherein at least one component-specific gear ratio information and/or at least one component-specific contact point information is further considered.

**4.** Method according to one of the preceding claims, wherein the load information considers power output of the wind turbine and/or torque on the respective component and/or rotational speed of the respective component.

**5.** Method according to claim 4, wherein torque of the respective component, particularly torque on the main shaft, is determined from rotational speed and power output of the wind turbine.

**6.** Method according to claim 5, wherein electromechanical losses are considered for determining the torque.

**7.** Method according to one of the preceding claims, wherein a component-specific lifetime information indicating the already consumed or remaining lifetime of the respective component is determined from the respective damage information and at least one component-specific damage threshold information indicating the maximum damage the component is able to withstand without failure.

8.  Method according to claim 7, wherein the at least one component-specific damage threshold information is determined from a number of component-specific reference cycles, component-specific equivalent load information and a component-specific material factor, particularly taken from Woehler data.

9.  Method according to one of the preceding claims, wherein a component-specific lifetime information indicating the already consumed or remaining lifetime of the respective component is determined from an equivalent load information and a component-specific reference load information, the equivalent load information considering a respective damage of the respective component in dependence of the number of rotations the component has performed and a component-specific material factor, particularly taken from Woehler data.

10.  Method according to one of the preceding claims, wherein the load information and/or the damage information are determined continuously or not continuously.

11.  Method according to one of the preceding claims or one of the claims 1- 6 and one of the claims 7 - 9, wherein determined component-specific load information and/or damage information and/or lifetime information are stored in a storage medium, whereby the stored load information and/or damage information and/or lifetime information are used as the basis for determining respective load information and/or damage information and/or lifetime information of further rotatable components by applying appropriate component-specific material factor, particularly taken from Woehler data, of the respective further rotatable components.

12.  Wind turbine (1) comprising at least one control unit (8) adapted to execute the method according to one of the preceding claims.

# FIG 1

FIG 2

**EUROPEAN SEARCH REPORT**

Application Number

EP 12 15 4932

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/087440 A1 (S P M INSTR AB [SE]; HEDIN LARS-OLOV [SE]) 21 July 2011 (2011-07-21) * abstract * * figure 1 * * page 2, line 7 - page 3, line 21 * * page 7, lines 26-27 * ----- | 1-12 | INV. G01L3/24 G01M13/02 G01M13/04 F03D7/02 |
| X | WO 2012/000504 A1 (VESTAS WIND SYS AS [DK]; ROSENVARD PAW [DK]; LUCENTE MICHELE [DK]) 5 January 2012 (2012-01-05) * abstract * * figure 4 * * page 3, line 1 - page 5, line 26 * * page 10, lines 7-16 * * page 6, lines 1-11 * ----- | 1-12 | |
| X | US 2002/000723 A1 (WEITKAMP ROLAND [DE]) 3 January 2002 (2002-01-03) * abstract * * paragraphs [0006] - [0008] * * paragraphs [0014] - [0028] * ----- | 1-12 | |
| A,D | US 5 210 704 A (HUSSEINY ABDO A [US]) 11 May 1993 (1993-05-11) * abstract * * column 22, lines 13-45 * ----- | 1-12 | TECHNICAL FIELDS SEARCHED (IPC) G01L G01M F03D G01H |

The present search report has been drawn up for all claims

| Place of search | Date of completion of the search | Examiner |
|---|---|---|
| The Hague | 30 July 2012 | Nelva-Pasqual, F |

EPO FORM 1503 03.82 (P04C01)

## ANNEX TO THE EUROPEAN SEARCH REPORT
## ON EUROPEAN PATENT APPLICATION NO.

EP 12 15 4932

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2012

| Patent document cited in search report | | Publication date | Patent family member(s) | | Publication date |
|---|---|---|---|---|---|
| WO 2011087440 | A1 | 21-07-2011 | SE<br>WO | 1000631 A1<br>2011087440 A1 | 19-07-2011<br>21-07-2011 |
| WO 2012000504 | A1 | 05-01-2012 | NONE | | |
| US 2002000723 | A1 | 03-01-2002 | DE<br>EP<br>US<br>US | 10011393 A1<br>1132614 A2<br>2002000723 A1<br>2003127862 A1 | 13-09-2001<br>12-09-2001<br>03-01-2002<br>10-07-2003 |
| US 5210704 | A | 11-05-1993 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5210704 A